# EUROPÄISCHE PATENTSCHRIFT

(11) **EP 1 075 939 B1**
(45) Veröffentlichungstag und Bekanntmachung des Hinweises auf die Patenterteilung: **28.01.2004**
(21) Anmeldenummer: 00116106.6
(22) Anmeldetag: 28.07.2000
(51) Int. Cl.: B32B 27/08, C08L 23/08

(54) **Heisskaschierbare Mehrschichtfolie**
Multilayer films which can be hot laminated
Feuilles multicouches, laminables à chaud

(30) Priorität: 10.08.1999 DE 19937773
(43) Veröffentlichungstag der Anmeldung: 14.02.2001
(73) Patentinhaber: Wolff Walsrode AG, 29655 Walsrode (DE)
(72) Erfinder: Sperlich, Bernd, Dr., 29664 Walsrode (DE); Schwarz, Willi, 29699 Bomlitz (DE)
(74) Vertreter: Feldhues, Michael L.F., Dr.

(56) Entgegenhaltungen:
- EP-A- 0 425 820
- DE-A- 3 744 214

## Beschreibung

Die vorliegende Erfindung betrifft heißkaschierbare und hochglänzende mindestens monoaxial orientierte Mehrschichtfolien mit einer heißkaschierbaren Schicht zum Herstellen eines Verbundes mit verschiedenen Substraten, wie z.B. Papier, Pappe, Kartonagen, Metall- und Kunstofffolien, Stoffbahnen, Gewebenetzen.

Mehrschichtfolien aus Polyolefinen, die eine gereckte Polypropylenschicht besitzen und mit verschiedenen heißklebefähigen Stoffen, z.B. Polyethylen, Ethylenvinylacetat oder Ionomeren beschichtet sind, sind z.B. bekannt aus den japanischen Offenlegungsschriften 60-109 834, 53-4082, US-A-4 629 657 und EP-A-0 263 882. Die bekannten Mehrschichtfolien weisen diverse Nachteile auf, z.B. mangelnde Verbundhaftung, Rollneigung des kaschierten Produktes und insbesondere unbefriedigende optische Eigenschaften. Ein weiterer Nachteil ist die Blockneigung der Folie auf der Rolle, was die Verarbeitbarkeit beeinträchtigt. EP 0 424 761 B1 beschreibt eine Folie mit guter Verbundhaftung und geringer Blockneigung, die optischen Eigenschaften dieser Folie entsprechen jedoch nicht den heutigen Anfordernissen. EP-A-0 425 820 beschreibt eine teilweise verseifte Ethylenvinylacetat-Zusammensetzung, die in der Außenschicht von mehrschichtigen Strukturen gebraucht werden kann.

Aufgabe der Erfindung war es, heißkaschierbare Mehrschichtfolien zur Verfügung zu stellen, die die aufgeführten Nachteile, insbesondere die unbefriedigenden optischen Eigenschaften und die Blockneigung auf der Rolle, nicht aufweisen und sich daher als Kaschierfolien, insbesondere für die Hochglanzkaschierung, eignen.

Überraschenderweise gelang dies durch Bereitstellen einer mindestens monoaxial orientierten Folie der eingangs genannten Gattung, die dadurch gekennzeichnet ist, daß sie eine Basisschicht I, die im wesentlichen aus Polypropylen besteht, eine Außenschicht II, die ebenfalls im wesentlichen aus Polypropylen besteht, und eine durch Wärmezufuhr heißkaschierbare Außenschicht III enthält, dadurch gekennzeichnet, daß die Schicht III im wesentlichen aus einem Ethylenvinylacetat-Copolymeren A und einem Ethylenvinylacetat-Copolymeren B besteht und diese beiden Ethylenvinylacetat-Copolymeren einen unterschiedlichen Vinylacetatgehalt aufweisen.

Die Basisschicht I besteht im wesentlichen oder vollständig aus einem Polypropylen. Vorzugsweise wird ein isotaktisches Polypropylen mit einer Dichte von 0,90 bis 0,91 g/cm³ und einem Schmelzflußindex von 1 bis 4 g/10 min bei 230°C/21,6 N (nach DIN 53 735) verwendet. Des weiteren kann die Basisschicht I Gleitmittel und Antistatikadditive enthalten.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere geeignetes aliphatisches Säureamid ist Erucasäureamid.

Bevorzugte Antistatikadditive sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren ist Glycerinmonostearat geeignet und wird in einer Menge von 0,03 % bis 0,5 Gew.-% als Antistatikum eingesetzt.

Die Außenschicht II besteht ebenfalls im wesentlichen aus Polypropylen. Vorzugsweise wird ein isotaktisches Polypropylen mit einer Dichte von 0,90 bis 0,91 g/cm³ und einem Schmelzflußindex von 1 bis 10 g/10min bei 230°C/21,6 N (nach DIN 53 735) verwendet. Die Außenschicht II enthält vorzugsweise 0,02 bis 1,0 % Antiblockmittel, besonders bevorzugt 0,05 bis 0,2 %. Geeignete Antiblockmittel sind anorganische Zusatzstoffe wie Siliciumdioxid, Calciumcarbonat, Magnesiumsilicat, Aluminiumsilikat, Calciumphosphat und dergleichen und/oder unverträgliche organische Polymerisate wie Polyamide, Polyacrylate, Polymethacrylate, Polyester, Polycarbonate und dergleichen, bevorzugt wird Siliciumdioxid eingesetzt. Der Gehalt an Antiblockmittel liegt im Bereich von 0,05 bis 1 Gew.-%, vorzugsweise 0,1 bis 0,3 Gew.-%. Die mittlere Teilchengröße liegt zwischen 1 und 6 µm, insbesondere 2 und 5 µm.

In einer bevorzugten Ausführungsform hat das Ethylenvinylacetat-Copolymer A einen Vinylacetatgehalt von 10 bis 30 % und das Ethylenvinylacetat-Copolymer B einen Vinylacetatgehalt von 1 bis 10 %. In einer besonders bevorzugten Ausführungsform hat das Ethylenvinylacetat-Copolymer A einen Gehalt an polymerisierten Vinylacetat-Einheiten von 15 bis 25 Gew.-% und das Ethylenvinylacetat-Copolymer B einen Gehalt an polymerisierten Vinylacetat-Einheiten von 3 bis 7 Gew.-%. In einer bevorzugten Ausführungsform beträgt der Anteil des Ethylenvinylacetat-Copolymeren A in der Außenschicht III 60 bis 95 % und der Anteil des Ethylenvinylacetat-Copolymeren B in der Außenschicht III 5 bis 40 %. In einer besonders bevorzugten Ausführungsform beträgt der Anteil des Ethylenvinylacetat-Copolymeren A in der Außenschicht III 70 bis 90 % und der Anteil des Ethylenvinylacetat-Copolymeren B in der Außenschicht III 10 bis 30 %.

Die MFI-Werte der beiden Ethylenvinylacetat-Copolymeren A und B liegen bevorzugt zwischen 1 und 30 g/10 min (ASTM D 1238). Der MFI des Ethylenvinylacetat-Copolymeren A liegt besonders bevorzugt zwischen 10 und 30 g/10 min (ASTM D 1238) und der MFI des Ethylenvinylacetat-Copolymeren B liegt besonders bevorzugt zwischen 4 und 15 g/10 min (ASTM D 1238).

Die erfindungsgemäßen Mehrschichtfolien eignen sich besonders als Hochglanzkaschierfolien zum Herstellen von Papier- und Kartonverbunden und zur Veredelung grafischer Erzeugnisse, wie Bücher, CD- und Prospekteinbände, die auch geprägt werden können.

Die erfindungsgemäßen Mehrschichtfolien können nach üblichen Verfahren wie Laminierung, Beschichtung, Schmelzextrusion oder Schmelzcoextrusion produziert werden. In einer bevorzugten Ausführungsform wird die Basisschicht I und die Außenschicht II coextrudiert und in einer Richtung gereckt, wobei anschließend an die Reckung eine Laminierung oder Extrusion der heißkaschierbaren Schicht III erfolgt. Anschließend wird die so erhaltene Mehrschichtfolie noch einmal gereckt, vorzugsweise in die Richtung, in der noch keine Reckung vorliegt.

Die erfindungsgemäßen Mehrschichtfolien werden mindestens monoaxial, bevorzugt biaxial gereckt, wobei die Reckung in Maschinenlaufrichtung vorzugsweise im Verhältnis 5:1 bis 7:1 und quer zur Maschinenlaufrichtung im Verhältnis 7:1 bis 10:1 vorgenommen wird.

In den erfindungsgemäßen Mehrschichtfolien hat die Basisschicht I im allgemeinen eine Dicke von 8 bis 50 µm, vorzugsweise 12 bis 20 µm, die Außenschicht II vorzugsweise eine Dicke von 0,6 bis 3,0 µm und die thermokaschierbare Außenschicht III im allgemeinen eine Dicke von 5 bis 20 µm, vorzugsweise 7 bis 15 µm.

Die erfindungsgemäßen Folien können ein- oder beidseitig einer Corona Vorbehandlung unterzogen werden.

Gegenstand der Erfindung ist weiterhin ein Verfahren zur Herstellung von Verbunden aus beliebigen Substraten und einer erfindungsgemäßen Folie, dadurch gekennzeichnet, daß man das Substrat und die Folie unter Wärme- und Druckeinwirkung zusammenführt, wobei die thermokaschierbare Außenschicht III dem Substrat zugewandt ist. Bei den Substraten handelt es sich vorzugsweise um Materialien, die üblicherweise für die Hochglanzkaschierung verwendet werden, wie z.B. Papier, Pappe, Kunststoff, Metall, Holz, Gewebe, Vlies, pflanzliche Produkte, aber auch Folien, insbesondere Kunststoff- oder Metallfolien.

### Prüfmethoden:

### Abwickelverhalten:

Das Abwickelverhalten wurde am gefertigten Rollenmuster untersucht. Dabei wurde die Folie auf eine Liegebreite von ca. 250 mm auf einer Länge von 20 m aufgewickelt. Es ergab sich hierdurch ein Rollengewicht inklusive der Aufwickelhülse von ca. 1,5 kg. Die Abwickelbarkeit wurde in die folgenden Kategorien eingeteilt:
1. Abwicklung durch Rolleneigengewicht (+):
   Fixiert man das lose Ende des Rollenmusters und läßt man dann das Muster hängen, so rollt sich die gefertigte Folie durch die eigene Gewichtskraft ab.
2. Abwicklung durch zusätzlichen Zug möglich (o):
   Ein Abrollen durch das Rolleneigengewicht ist zwar nicht möglich, jedoch läßt sich die Folie ohne Überdehnungen oder Abrisse abwickeln.
3. Rolle verblockt (-):
   Ein Abrollen der Folie, ohne dieselbe stark zu deformieren oder zu zerstören, ist nicht möglich.

### Verbundhaftung:

Die Verbundhaftung der Folien wurde in einem Kaschierversuch untersucht. Hierzu wurden die zu untersuchenden Folien auf einer Thermokaschiermaschine der Fa. Billhöfer mit einem schwarz bedruckten Papierbogen kaschiert. Als Prozeßbedingungen wurde hierbei eine Kaschiertemperatur von ca. 120°C, ein Kaschierzylinderdruck von 150 bar und eine Kaschiergeschwindigkeit von von 5 m/min gewählt. Aus diesen gefertigten Mustern werden in Laufrichtung Prüfstreifen mit einer Breite von 15 mm geschnitten. An diesen Streifen wird die Verbundhaftung durch Abzug unter einem Winkel von 90° und Aufnahme der Abzugskraft gemessen.

### Glanz:

Zur Messung des Glanzes wird ein kaschiertes Muster mit einem schwarz bedruckten Papierbogen wie bei der Bestimmung der Verbundhaftung hergestellt. An diesem Muster wird die Glanzmessung in Anlehnung an die DIN 67 530 bei einem Winkel von 20° durchgeführt. Als Glanz wird der regulär reflektierte Lichtanteil, bezogen auf einen unter einem Winkel von 20° zum Lot einfallenden Lichtstrahl bezeichnet. Der Glanz wird in Glanzeinheiten (GE) angegeben, die auf einen Schwarzglasstandard bezogen werden. Der Wert des Oberflächenglanzes sollte möglichst hoch sein.

### Beispiele

### Beispiel 1:

Eine heißkaschierbare Schicht III mit den in Tabelle 1 angegebenen Bestandteilen wird auf eine monoaxial gereckte Basisfolie aus Polypropylen der Dichte 0,91 g/cm³ und dem Schmelzindex von 3,0 g/10 min bei 230°C/21,6 N aufgetragen und anschließend gereckt, so daß eine Verbundfolie mit einer Längsreckung im Verhältnis 5:1 und einer Querreckung im Verhältnis 10:1 erhalten wird.

Die Basisfolie setzt sich aus einer Außenschicht II von 1,0 µm Dicke, die aus Polypropylen der Dichte 0,91 g/cm³ und dem Schmelzindex von 3,0 g/10 min bei 230°C/21,6 N sowie einem Zusatz von 0,1 % Siliziumdioxid mit einer mittleren Korngröße von 4 µm besteht, und einer Kernschicht I aus o.g. Polypropylen zusammen. Die Folie, die sich aus den Schichten I und II zusammensetzt, hat insgesamt eine Dicke von 15 µm und die heißkaschierbare Schicht III eine Dicke von 10 µm.

### Beispiel 2:

Verfahren und Zusammensetzung der Schichten I und III wie bei Beispiel 1. Die Außenschicht II enthält kein Antiblockadditiv.

### Vergleichsbeispiele 3-5:

Verfahren und Zusammensetzung der Schichten I und II wie bei Beispiel 1 (Außenschicht II mit 0,1 % Siliziumdioxid als Antiblockadditiv). Die Zusammensetzung der thermokaschierbaren Außenschicht III ist aus Tabelle 1 ersichtlich.

**Tabelle 1**

| Beispiel | Zusammensetzung der thermokaschierbaren Außenschicht III | |
|---|---|---|
| | Copolymer A | Copolymer B |
| Beispiel 1 | 80 % Ethylenvinylacetat-Copolymer mit 20 % Vinylacetat Monomergehalt (MFI=20 g/10min (ASTM D 1238); | 20 % Ethylenvinylacetat-Copolymer mit 5 % Vinylacetat Monomergehalt (MFI=7,5 g/10min (ASTM D 1238); |
| | Dichte: 0,940 g/cm³) | |
| | | Dichte: 0,925 g/cm³) |
| Beispiel 2 | wie Beispiel 1 | wie Beispiel 1 |
| Vergleichsbeispiel 3 | wie Beispiel 1 | 20 % LDPE (MFI=7,5 g/10 min (ASTM D 1238); |
| | | Dichte: 0,9155 g/cm³) |
| Vergleichsbeispiel 4 | wie Beispiel 1 | 20 % Ethylenacrylsäure-Copolymer mit 11 % Acrylsäure Monomergehalt (MFI=8.0 g/10min (ASTM D 1238); |
| | | Dichte: 0,940 g/cm³) |
| Vergleichsbeispiel 5 | 100 % Ethylenvinylacetat-Copolymer mit 20 % Vinylacetat Monomergehalt (MFI=20 g/10min (ASTM D 1238); | ------- |
| | Dichte: 0,940 g/cm³) | |

**Tabelle 2:**

| Beispiel | Abwickelverhalten | Verbundhaftung in N | Glanz in GE |
|---|---|---|---|
| Beispiel 1 | + | 3,5 | 75 |
| Beispiel 2 | 0 | 3,4 | 78 |
| Vergleichsbeispiel 3 | + | 1,0 | 73 |
| Vergleichsbeispiel 4 | + | 3,3 | 62 |
| Vergleichsbeispiel 5 | - | 3,7 | 77 |

Aus Tabelle 2 ist ersichtlich, daß die erfindungsgemäßen Folien aus den Beispielen 1 und 2 gegenüber den Vergleichsbeispielen deutliche Verbesserungen bezüglich ihrem Abwickelverhalten, der Verbundhaftung und dem Glanz zeigen. Vergleichsbeispiel 3 weist zwar akzeptable Werte für Abwickelverhalten und Glanz auf, die Verbundhaftung ist hier jedoch unzureichend. Bei Vergleichsbeispiel 4 entspricht der Glanz nicht den heutigen Anforderungen und bei Vergleichsbeispiel 5 verblockt die Folie und läßt sich nicht abwickeln.

## Patentansprüche

1. Heißkaschierbare, mindestens monoaxial orientierte Mehrschichtfolie mit einer Basisschicht I, die im wesentlichen aus Polypropylen besteht, einer Außenschicht II, die ebenfalls im wesentlichen aus Polypropylen besteht, und einer durch Wärmezufuhr heißkaschierbaren Außenschicht III, **dadurch gekennzeichnet, daß** die Schicht III im wesentlichen aus einem Ethylenvinylacetat-Copolymeren A und einem Ethylenvinylacetat-Copolymeren B besteht und diese beiden Ethylenvinylacetat-Copolymeren einen unterschiedlichen Vinylacetatgehalt aufweisen.

2. Mehrschichtfolie nach Anspruch 1, **dadurch gekennzeichnet, daß** das Ethylenvinylacetat-Copolymer A einen Gehalt an polymerisierten Vinylacetat-Einheiten von 10 bis 30 Gew.-% und das Ethylenvinylacetat-Copolymer B einen Gehalt an polymerisierten Vinylacetat-Einheiten von 1 bis 10 Gew.-% aufweist.

3. Mehrschichtfolie nach Anspruch 1, **dadurch gekennzeichnet, daß** das Ethylenvinylacetat-Copolymer A einen Gehalt an polymerisierten Vinylacetat-Einheiten von 15 bis 25 Gew.-% und das Ethylenvinylacetat-Copolymer B einen Gehalt an polymerisierten Vinylacetat-Einheiten von 3 bis 7 Gew.-% aufweist.

4. Folie nach wenigstens einem der vorhergehenden Ansprüche, **dadurch gekennzeichnet, daß** der Anteil des Ethylenvinylacetat-Copolymeren A in der Außenschicht III 60 % bis 95 % beträgt und der Anteil des Ethylenvinylacetat-Copolymeren B in der Außenschicht III 5 % bis 40 % beträgt.

5. Folie nach Anspruch 4, **dadurch gekennzeichnet, daß** der Anteil des Ethylenvinylacetat-Copolymeren A in der Außenschicht III 70 % bis 90 % beträgt und der Anteil des Ethylenvinylacetat-Copolymeren B in der Außenschicht III 10 % bis 30 % beträgt.

6. Folie nach wenigstens einem der vorhergehenden Ansprüche, **dadurch gekennzeichnet, daß** die Außenschicht II Antiblockadditive enthält.

7. Folie nach Anspruch 6, **dadurch gekennzeichnet, daß** der Gehalt an Antiblockadditiven in Außenschicht II zwischen 0,02 und 1,0 Gew.-% beträgt.

8. Folie nach Anspruch 6, **dadurch gekennzeichnet, daß** der Gehalt an Antiblockadditiven in Außenschicht II zwischen 0,05 und 0,2 Gew.-% beträgt.

9. Folie nach mindestens einem der Ansprüche 6 bis 8 , **dadurch gekennzeichnet, daß** das Antiblockadditiv Siliziumdioxid mit einer mittleren Teilchengröße von 2 bis 5 µm ist.

10. Verfahren zur Herstellung von Verbunden aus beliebigen Substraten und einer Folie gemäß Anspruch 1, **dadurch gekennzeichnet, daß** man das Substrat und die Folie unter Wärme- und Druckeinwirkung zusammenführt, wobei die Schicht III dem Substrat zugewandt ist.

11. Verfahren nach Anspruch 10, **dadurch gekennzeichnet, daß** das Substrat Papier, Pappe, Kunststoff, Metall, Holz, Gewebe, Vlies, pflanzliche Produkte oder Netz ist.

## Claims

1. Heat-laminable multi-layer film oriented at least monoaxially with a base layer I, which consists substantially of polypropylene, an external layer II, which also consists substantially of polypropylene, and an external layer III which can be heat-laminated by applying heat, **characterised in that** the layer III consists substantially of an ethylene vinyl acetate copolymer A and an ethylene vinyl acetate copolymer B and these two ethylene vinyl acetate copolymers have different vinyl acetate contents.

2. Multi-layer film according to claim 1, **characterised in that** the ethylene vinyl acetate copolymer A has a content of polymerised vinyl acetate units of 10 to 30 wt.% and the ethylene vinyl acetate copolymer B has a content of polymerised vinyl acetate units of 1 to 10 wt.%.

3. Multi-layer film according to claim 1, **characterised in that** the ethylene vinyl acetate copolymer A has a content of polymerised vinyl acetate units of 15 to 25 wt.% and the ethylene vinyl acetate copolymer B has a content of polymerised vinyl acetate units of 3 to 7 wt.%.

4. Film according to at least one of the above claims, **characterised in that** the proportion of the ethylene vinyl acetate copolymer A in the external layer III is 60% to 95% and the proportion of the ethylene vinyl acetate copolymer B in the external layer III is 5% to 40%.

5. Film according to claim 4, **characterised in that** the proportion of the ethylene vinyl acetate copolymer A in the external layer III is 70% to 90% and the proportion of the ethylene vinyl acetate copolymer B in the external layer III is 10% to 30%.

6. Film according to at least one of the above claims, **characterised in that** the external layer II contains anti-blocking additives.

7. Film according to claim 6, **characterised in that** the content of anti-blocking additives in external layer II is between 0.02 and 1.0 wt.%.

8. Film according to claim 6, **characterised in that** the content of anti-blocking additives in external layer II is between 0.05 and 0.2 wt.%.

9. Film according to at least one of claims 6 to 8, **characterised in that** the anti-blocking additive is silicon dioxide with an average particle size of 2 to 5 µm.

10. Process for the production of composites of any substrates and a film according to claim 1, **characterised in that** the substrate and the film are brought together under the action of heat and pressure, with the layer III facing the substrate.

11. Process according to claim 10, **characterised in that** the substrate is paper, cardboard, plastic, metal, wood, woven or non-woven fabric, vegetable products or net.

## Revendications

1. Feuille multicouches laminable à chaud et orientée, monoaxialement du moins, avec une couche de base I composée essentiellement de polypropylène, une couche extérieure II composée essentiellement aussi de polypropylène et une couche extérieure III laminable à chaud par un apport de chaleur, **caractérisée en ce que** la couche III se compose essentiellement d'un copolymère A d'éthylènevinylacétate et d'un copolymère B d'éthylènevinylacétate et ces deux copolymères d'éthylènevinylacétate présentent une teneur différente en vinylacétate.

2. Feuille multicouches selon la revendication 1, **caractérisée en ce que** le copolymère A d'éthylènevinylacétate présente une teneur en unités de vinylacétate polymérisées de 10 à 30% en poids et le copolymère B d'éthylènevinylacétate une teneur en unités vinylacétate polymérisées de 1 à 10% en poids.

3. Feuille multicouches selon la revendication 1, **caractérisée en ce que** le copolymère A d'éthylènevinylacétate présente une teneur en unités vinylacétate polymérisées de 15 à 25% en poids et le copolymère B d'éthylènevinylacétate une teneur en unités vinylacétate polymérisées de 3 à 7% en poids.

4. Feuille selon au moins une des revendications précédentes, **caractérisée en ce que** la part de copolymères A d'éthylènevinylacétate dans la couche extérieure III s'élève à 60 à 95% et la part de copolymères B d'éthylènevinylacétate dans la couche extérieure III s'élève à 5 à 40%.

5. Feuille selon la revendication 4, **caractérisée en ce que** la part du copolymère A d'éthylènevinylacétate dans la couche extérieure III s'élève à 70% à 90% et la part du copolymère B d'éthylènevinylacétate dans la couche extérieure III s'élève à 10% à 30%.

6. Feuille selon au moins une des revendications précédentes, **caractérisée en ce que** la couche extérieure II contient des additifs antiblocage.

7. Feuille selon la revendication 6, **caractérisée en ce que** le taux d'additifs antiblocage dans la couche extérieure II se situe entre 0,02 et 1,0% en poids.

8. Feuille selon la revendication 6, **caractérisée en ce que** le taux d'additifs antiblocage dans la couche extérieure II se situe entre 0,05 et 0,2% en poids.

9. Feuille selon au moins une des revendications 6 à 8, **caractérisée en ce que** l'additif antiblocage est le dioxyde de silicium avec une taille moyenne des particules de 2 à 5 µm.

10. Procédé de préparation de contrecollés de substrats quelconques et d'une feuille conformément à la revendication 1, **caractérisé en ce que** le substrat et la feuille sont contrecollés sous l'action de la chaleur et de la pression, la couche III étant tournée vers le substrat.

11. Procédé selon la revendication 10, **caractérisé en ce que** le substrat est du papier, du carton, du plastique, du métal, du bois, un tissu, une toile, des produits végétaux ou un filet.
